# EUROPEAN PATENT APPLICATION

(11) **EP 4 130 919 A1**
(43) Date of publication of application: **08.02.2023**
(21) Application number: 21776792.0
(22) Date of filing: 23.03.2021
(51) Int. Cl.: G05D 1/02

(54) **AUTOMATIC WORKING SYSTEM, SELF-MOVING DEVICE AND CONTROL METHOD THEREFOR**

(30) Priority: 23.03.2020 CN 202010208865
(71) Applicant: Positec Power Tools (Suzhou) Co., Ltd., Suzhou, Jiangsu 215123 (CN)
(72) Inventor: DALFRA, Davide, Suzhou, Jiangsu 215123 (CN); CONTI, Emanuel, Suzhou, Jiangsu 215123 (CN); TESTOLIN, Federico, Suzhou, Jiangsu 215123 (CN)
(74) Representative: Dentons UK and Middle East LLP
(86) International application number: PCT/CN2021/082458
(87) International publication number: WO 2021/190514

(57) **Abstract**

The disclosure relates to an automatic working system, a self-moving device and a control method therefor. The automatic working system includes a self-moving device configured to automatically move and work in a working region set by a user, a magnetic strip configured to generate a magnetic signal. The self-moving device includes a boundary recognizing module configured to recognize a boundary of the working region, a magnetic induction module configured to induce the magnetic signal, a control module configured to control the self-moving device to move along the boundary according to the boundary recognized by the boundary recognizing module and control the self-moving device to move along the magnetic strip according to the magnetic signal if the magnetic induction module induces the magnetic signal in process of moving along the boundary. The diversified flexible setting of positions of a charging station can be achieved by utilizing each embodiment of the disclosure.

## Description

### Technical Field

The disclosure relates to the field of an automatic working system, more particularly relates to an automatic working system, a self-moving device and a control method therefor.

### BACKGROUND

With the development of scientific technology, intelligent self-moving devices are well known. Since the self-moving devices can execute relevant preset tasks based on automatic preset programs without manual operation and human intervention, their application to industrial fields and household products is very wide. Through application to industrial fields, such as robots for executing various functions and application to household products, such as lawn mowers or dust collectors, these intelligent self-moving devices greatly save the time for people and bring great convenience to industrial production and home life. When the self-moving devices need to be charged, they need to return to a charging station to be charged.

In the prior art, the self-moving device is guided to return to be charged through a boundary line, so that the charging station for the existing self-moving device can only be provided on the boundary of a working region. Therefore, the position setting of the charging station is inflexible, and the self-moving device may not move or accidents, faults, etc. may occur when there are many obstacles, uneven ground, and other problems that are not conducive to normal device move at the boundary of the region.

### SUMMARY

The disclosure provides an automatic working system, a self-moving device and a control method therefor. The purpose of the disclosure is to achieve diversified flexible setting of positions of a charging station.

According to one aspect of the disclosure, an automatic working system is provided.

The automatic working system includes a self-moving device, configured to automatically move and work in a working region set by a user; and
a magnetic strip, configured to generate a magnetic signal;
the self-moving device includes:
   a boundary recognizing module, configured to recognize a boundary of the working region;
   a magnetic induction module, configured to induce the magnetic signal; and
   a control module, configured to control the self-moving device to move along the boundary according to the boundary recognized by the boundary recognizing module, and control the self-moving device to move along the magnetic strip according to the magnetic signal if the magnetic induction module induces the magnetic signal in a process of moving along the boundary.

In a possible embodiment, the automatic working system further includes a station, and the station is configured to provide maintenance for the self-moving device. The magnetic strip is configured to generate the magnetic signal, and the magnetic signal is configured to guide the self-moving device to the station.

In a possible embodiment, the station is configured to charge the self-moving device. The station is provided with a pole plate. The self-moving device is provided with a charging interface. The magnetic strip is configured to guide the self-moving device to the station so that the charging interface is in butt joint with the pole plate.

In a possible embodiment, the boundary recognizing module includes a position detection module configured to acquire a current position of the self-moving device and compare the current position with a preset map to recognize the boundary of the working region.

In a possible embodiment, the boundary recognizing module includes a region detection module configured to recognize the boundary of the working region based on differences between ground information of the working region and ground information of a non-working region.

According to another aspect of the disclosure, a control method for a self-moving device is provided. The control method includes:
in response to a return maintenance request of the self-moving device, controlling the self-moving device to move along a boundary according to the boundary recognized by the self-moving device; and
in a process of moving along the boundary, controlling the self-moving device to move to a station along a magnetic strip in response to a magnetic signal induced by the self-moving device.

In a possible embodiment, a step of controlling the self-moving device to move to a station along a magnetic strip includes:
controlling the self-moving device to move to the station along the magnetic strip according to the magnetic signal; and
in response to a contact signal between a charging interface of the self-moving device and a pole plate of the station, controlling the self-moving device to stop and to be charged.

In a possible embodiment, the control method further includes:
in response to a disconnecting signal between the charging interface of the self-moving device and the pole plate of the station, controlling the self-moving device to move along the magnetic strip according to the magnetic signal induced by the self-moving device; and
in a process of moving along the magnetic strip, controlling the self-moving device to move along the boundary in response to the boundary recognized by the self-moving device.

According to further another aspect of the disclosure, a self-moving device is provided. The self-moving device includes:
a device body,
a boundary recognizing module, installed in the device body and configured to recognize a boundary of a working region;
a magnetic induction module, installed in the device body and configured to induce a magnetic signal, where the magnetic signal is generated by a magnetic strip; and
a control module, configured to control the self-moving device to move along the boundary according to the boundary recognized by the boundary recognizing module, and control the self-moving device to move along the magnetic strip according to the magnetic signal if the magnetic induction module induces the magnetic signal in a process of moving along the boundary.

According to various embodiments provided by each aspect of the disclosure, the charging station can be flexibly set in various positions instead of being limited at a boundary line. By combining the magnetic strip with the boundary, the automatic guidance of the self-moving device can be achieved. Therefore, the diversified flexible setting of positions of the station can be achieved.

According to detailed descriptions on exemplary embodiments with the reference to drawings, other features and aspects of the disclosure will become clearer.

### BRIEF DESCRIPTION OF THE DRAWINGS

Accompanying drawings included in the specification and constructing a part of the specification jointly show the exemplary embodiments, characteristics and aspects of the disclosure, and are intended to explain the principles of the disclosure.
FIG. 1 is a schematic structure diagram of a system of an automatic working system according to an embodiment of the disclosure.
FIG. 2 is a schematic structure diagram of a system of an automatic working system according to another embodiment of the disclosure.
FIG. 3 is a flow diagram of a control method for a charging process of a self-moving device according to an embodiment of the disclosure.
FIG. 4 is a schematic structure diagram of a module structure of a self-moving device according to an embodiment of the disclosure.

### DETAILED DESCRIPTION

The following will describe various exemplary embodiments, features and aspects of the disclosure in detail with reference to the accompanying drawings. Like accompanying symbols in the accompanying drawings represent elements with like or similar functions. Although various aspects of the embodiments are illustrated in the accompanying drawing, the accompanying drawings are not necessarily drawn in proportion unless otherwise specified.

The specific term "exemplary" herein means "used as an example, embodiment or illustrative". Any embodiment described as "exemplary" is not necessarily explained as being superior or better than other embodiments.

In addition, for better illustration of the disclosure, various specific details are given in the following specific embodiment. A person of ordinary skill in the art should understand that the disclosure may also be implemented without the specific details. In some embodiments, methods, means, components, and circuits well known by a person skilled in the art are not described in detail, so that a main purpose of the disclosure is highlighted.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification indicates an "or" relationship between the associated objects.

The term "a plurality of" in the embodiments of the disclosure means two or more. The descriptions such as "first" and "second" in the embodiments of the disclosure are used only to illustrate and distinguish described objects without a specific order, do not indicate that a quantity in the embodiments of the disclosure is particularly limited, and cannot constitute any limitation on the embodiments of the disclosure.

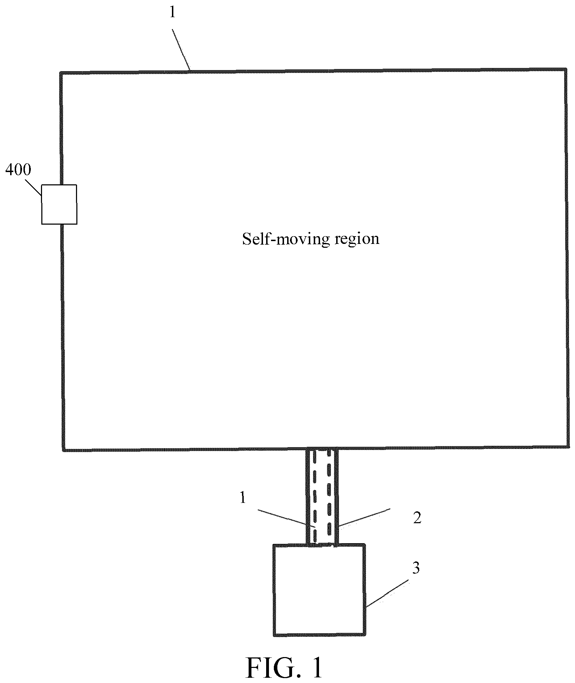

FIG. 1 is a schematic structure diagram of a system of an automatic working system according to an embodiment of the disclosure. The system is applicable to any self-moving device. The self-moving device may be any self-moving electronic device or intelligent device such as an automatic lawn mowing robot or a floor mopping robot. A corresponding application environment may be any environment, such as lawn or floor, capable of being applicable to the self-moving device.

In this embodiment, an automatic working system is provided. The automatic working system includes a self-moving device configured to automatically move and work in a working region set by a user, and a magnetic strip configured to generate a magnetic signal. The self-moving device includes a boundary recognizing module configured to recognize a boundary of the working region, a magnetic induction module configured to induce the magnetic signal, and a control module configured to control the self-moving device to move along the boundary according to the boundary recognized by the boundary recognizing module and control the self-moving device to move along the magnetic strip according to the magnetic signal if the magnetic induction module induces the magnetic signal in a process of moving along the boundary.

The boundary may be a physical boundary, such as a wall, a barrier or a fence, also may be a signal-sending virtual boundary, or even may be a large-size obstacle, which is not limited in this embodiment. It should be noted that correspondingly, a corresponding boundary recognizing module may be disposed in the self-moving device so as to adaptively recognize a physical type boundary or a signal type boundary.

In some embodiments, the boundary of the working region is defined by a boundary line, the boundary line is configured to generate a magnetic field signal when being electrified; and the boundary recognizing module is configured to induce the magnetic field signal to recognize the boundary of the working region.

In some embodiments, the boundary recognizing module includes a position detection module configured to acquire a current position of the self-moving device and compare the current position with a preset map to recognize the boundary of the working region.

In other embodiments, the boundary recognizing module includes a region detection module configured to recognize the boundary of the working region based on differences between ground information of the working region and ground information of a non-working region.

In an embodiment, the automatic working system further includes a station configured to provide maintenance for the self-moving device. The maintenance herein includes but is not limited to stop, energy supply, working head replacement, etc.

The magnetic strip is configured to generate the magnetic signal, and the magnetic signal is configured to guide the self-moving device to the station.

According to this embodiment, the self-moving device is guided to the station through the magnetic strip, so that the self-moving device can return to the station to achieve maintenance, and can better complete subsequent work.

In some embodiments, the maintenance may be charging. That is, the station is configured to charge the self-moving device.

Specifically, the station is provided with a pole plate; the self-moving device is provided with a charging interface; and
the magnetic strip is configured to guide the self-moving device to the station so that the charging interface is in butt joint with the pole plate.

Through the magnetic strip, the position of the charging interface on the self-moving device is guided to the corresponding position of the pole plate of the station, and the accurate butt joint of the charging interface and the pole plate can be achieved, so that the subsequent charging work can be completed. For example, after the butt joint is completed, the self-moving device may perform communication interaction with the station to achieve a charging process. For example, the self-moving device may send a magnetic signal to the station, and then, the station charges the self-moving device according to the signal. Of course, the station may automatically detect the butt joint process, and starts the charging after the butt joint is completed. At this moment, the communication interaction is not needed, the time is saved, and at the same time, the influence caused by communication instability is avoided.

Specifically, as shown in FIG. 1, the automatic working system includes:
a self-moving device 400, the self-moving device 400 automatically moves and works in a working region. A boundary of the working region is defined by a boundary line 1, and the boundary line is configured to generate a first magnetic signal. A charging station 3 is disposed in a position far away from the boundary of the working region. The magnetic strip 2 extends from the boundary to the charging station, and is configured to generate a second magnetic signal. The working region may be any region, such as lawn or floor, capable of being applicable to the self-moving device.

The charging station 3 may be disposed in any position with a certain distance away from the boundary. Specifically, as shown in FIG. 1, the charging station 3 may be disposed beyond the working region. In such a manner, the flexible setting of the charging station can be ensured, the occupation of the working region can be avoided, and no influence will be caused on the automatic move of the self-moving device 400 in the working region.

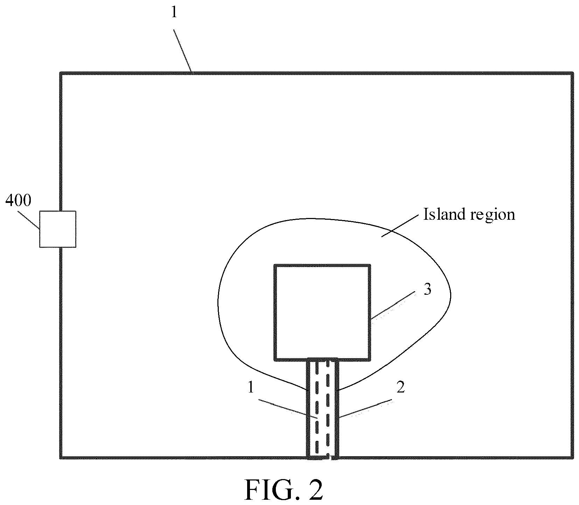

Of course, the position of the charging station in FIG. 1 is exemplary, and in other embodiments of the disclosure, the charging station may also be disposed in any other positions. FIG. 2 is a schematic structure diagram of a system of an automatic working system according to another embodiment of the disclosure. As shown in FIG. 2, a charging station 3 may be disposed in a working region, and may further be, for example, disposed in an island region in the working region, and the influence on the automatic move of the self-moving device 400 may also be avoided in such a manner.

In an embodiment of the disclosure, as shown in FIG. 1 and FIG. 2, both ends of a boundary line 1 are connected with a charging station 3 and form a closed loop, the magnetic strip 2 is disposed above two strands of the boundary line extending from the boundary of the region to the charging station 3 (as shown by a dotted line portion in FIG. 1 and FIG. 2), and an extending direction of the magnetic strip 2 is consistent with an extending direction of the two strands of the boundary line. The magnetic strip 2 may cover above the two strands of the boundary line, or may be merged with the two strands of the boundary line.

The boundary line 1 starts from a connection starting point of the charging station 3, and extends along the boundary of the working region to a connection end point of the charging station 3.

In an embodiment of the disclosure, a connection position of a magnetic strip 2 and a charging station 3 is matched with a position of a pole plate of a charging station 3, or a connection position of an extending direction of the magnetic strip 2 and the charging station 3 is matched with the position of the pole plate of the charging station 3, and may be used to guide the butt joint between the self-moving device and the charging station. The matched state may refer to that when the self-moving device 400 moves to the connection position, the self-moving device can be just in contact with the pole plate of the charging station 3 and can achieve the conduction.

In an embodiment of the disclosure, a connection position of two strands of a boundary line and the charging station 3 is matched with a position of a pole plate of a charging station 3, and is used to guide the butt joint between a self-moving device and the charging station 3. The matched state may refer to that when the self-moving device 400 moves to the connection position, the self-moving device can be just in contact with the pole plate of the charging station 3 and can achieve the conduction.

Based on the automatic working system, the disclosure further provides a control method for a self-moving device. The method includes: in response to a return maintenance request of the self-moving device, controlling the self-moving device to move along a boundary according to the boundary recognized by the self-moving device; and in a process of moving along the boundary, controlling the self-moving device to move to a station along the magnetic strip in response to a magnetic signal induced by the self-moving device.

A step of controlling the self-moving device to move to the station along a magnetic strip includes: controlling the self-moving device to move to the station along the magnetic strip according to the magnetic signal; and in response to a contact signal between a charging interface of the self-moving device and a pole plate of the station, controlling the self-moving device to stop and to be charged.

In some embodiments, the method further includes:
in response to a disconnecting signal between the charging interface of the self-moving device and the pole plate of the station, controlling the self-moving device to move along the magnetic strip according to the magnetic signal induced by the self-moving device; and
in a process of moving along the magnetic strip, controlling the self-moving device to move along the boundary in response to the boundary recognized by the self-moving device.

Specifically, the control method is illustrated by taking an example that the maintenance is charging.

For example, a control method for a charging process of a self-moving device is provided, and the control method may be applied to the automatic working system.

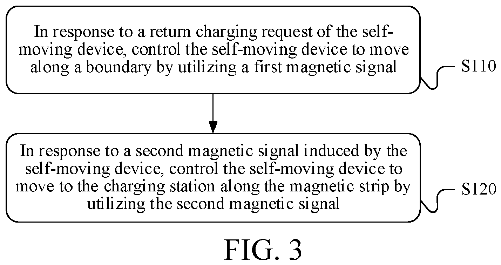

FIG. 3 is a flow diagram of a control method for a charging process of a self-moving device according to an embodiment of the disclosure. As shown in FIG. 3, the method may include:
Step 110: In response to a return charging request of the self-moving device, the self-moving device is controlled to move along a boundary by utilizing a first magnetic signal.
Step 120: In response to a second magnetic signal induced by the self-moving device, the self-moving device is controlled to move to the charging station along the magnetic strip by utilizing the second magnetic signal.

In an embodiment of the disclosure, the control method may further include:
Step 210: In response to charging completion, the self-moving device is controlled to move to the boundary line along the magnetic strip by utilizing the second magnetic signal.
Step 220: In response to the first magnetic signal induced by the self-moving device, the self-moving device is controlled to enter the working region by utilizing the first magnetic signal.

In other embodiments, the method may include a step of in response to charging completion, controlling the self-moving device to enter the working region along the magnetic strip by utilizing the second magnetic signal.

In an embodiment of the disclosure, a step of controlling the self-moving device to move to the charging station along the magnetic strip by utilizing the second magnetic signal includes:
the self-moving device is controlled to move to the charging station along the magnetic strip by utilizing the second magnetic signal; and
in response to contact between a charging interface of the self-moving device and a pole plate of the charging station, the self-moving device is controlled to stop and to be charged.

The disclosure further provides a self-moving device, and the self-moving device includes:
a device body,
a boundary recognizing module, installed in the device body and configured to recognize a boundary of a working region;
a magnetic induction module, installed in the device body and configured to induce a magnetic signal, where the magnetic signal is generated by a magnetic strip; and
a control module, configured to control the self-moving device to move along the boundary according to the boundary recognized by the boundary recognizing module, and control the self-moving device to move along the magnetic strip according to the magnetic signal if the magnetic induction module induces the magnetic signal in a process of moving along the boundary.

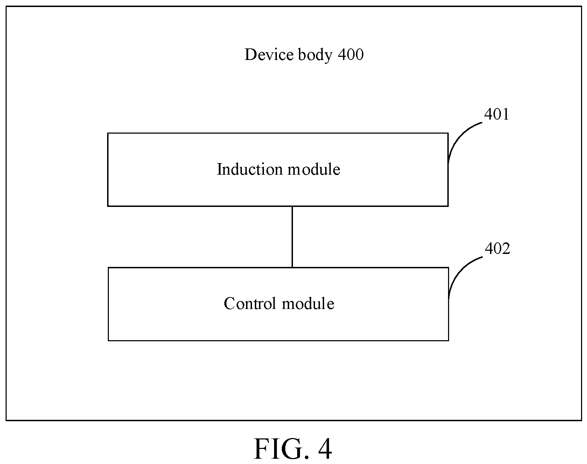

For convenient understanding, the self-moving device is briefly illustrated in conjunction with FIG. 4. An induction module may be a joint name of a magnetic induction module and a boundary recognizing module.

The disclosure further provides a self-moving device capable of being applied to the automatic working system. FIG. 4 is a schematic structure diagram of a module structure of a self-moving device according to an embodiment of the disclosure. Specifically, as shown in FIG. 4, the self-moving device may include: a device body 400; an induction module 401 capable of being used to induce the first magnetic signal and used to induce the second magnetic signal; and a control module 402 capable of being configured to control the self-moving device to move along the boundary line by utilizing the first magnetic signal in response to a return charging request of the self-moving device and control the self-moving device to move to the charging station along the magnetic strip by utilizing the second magnetic signal in response to the second magnetic signal induced by the self-moving device.

In an embodiment of the disclosure, the control module 402 may be further configured to control the self-moving device to move along a magnetic strip to the boundary line by utilizing the second magnetic signal in response to charging completion; and control the self-moving device to enter the working region by utilizing the first magnetic signal in response to the first magnetic signal induced by the self-moving device.

In an embodiment, a step of controlling the self-moving device to move to a charging station along a magnetic strip by utilizing a second magnetic signal includes: the self-moving device is controlled to move to the charging station along the magnetic strip by utilizing a second magnetic signal; and in response to contact between a charging interface of the self-moving device and a pole plate of the charging station, the self-moving device is controlled to stop and to be charged.

The disclosure may be a system, a method, and/or a computer program product. A computer program product may include a computer-readable storage medium, storing computer-readable program instructions for a processor to implement the aspects of the disclosure.

The computer-readable storage medium may be a physical device that can retain and store an instruction used by an instruction-executing device. The computer-readable storage medium may be, for example, but is not limited to, an electrical storage device, a magnetic storage device, an optical storage device, an electromagnetic storage device, a semiconductor storage device, or any appropriate combination of the above. In a more specific example (a non-exhaustive list), the computer-readable storage medium includes a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device such as a punched card or protrusion in a groove in which instructions are stored, and any appropriate combination of the above. The computer-readable storage medium as used here is not explained as a transient signal itself, such as a radio wave or other electromagnetic waves propagated freely, an electromagnetic wave propagated through a waveguide or other transmission media (e.g., a light pulse propagated through an optical fiber cable), or a magnetic signal transmitted over a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may include copper transmission cables, fiber optic transmission, wireless transmission, routers, firewalls, switches, gateway computers and/or edge servers. A network adapter card or network interface in each computing/processing device receives computer-readable program instructions from the network and forwards the computer-readable program instructions for storage in a computer-readable storage medium within the respective computing/processing device.

Computer program instructions used to perform operations of the disclosure may be assembly instructions, instruction set architecture (ISA) instructions, machine instructions, machine-related instructions, microcode, firmware instructions, status setting data, or source code or object code written in any combination of one or more programming languages. The programming languages including object-oriented programming languages such as Smalltalk and C++, and conventional procedural programming languages such as "C" language or similar programming languages. Computer-readable program instructions may be executed entirely on a computer of a user, partly on the computer of the user, as a stand-alone software package, partly on the computer of the user and partly on a remote computer, or entirely on the remote computer or a server. For the case involving a remote computer, the remote computer may be connected to a computer of a user through any type of network including a LAN or a WAN, or may be connected to an external computer (for example, through the Internet by using an Internet service provider). In some embodiments, an electronic circuit, such as a programmable logic circuit, a field programmable gate array (FPGA), or a programmable logic array (PLA), is customized by using status information of the computer-readable program instructions. The electronic circuit may execute the computer-readable program instructions to implement various aspects of the disclosure.

Aspects of the disclosure are described herein with reference to flowchart and/or block diagrams of methods, apparatus (systems), and computer program products according to embodiments of the disclosure. It should be understood that each block of the flowchart and/or block diagrams, and combinations of blocks in the flowchart and/or block diagrams, can be implemented the computer-readable program instructions.

These computer-readable program instructions can be provided to a processor of a general computer, special computer, or other programmable data processing apparatus, thereby producing a machine, such that the instructions, when executed via the processor of the computer or other programmable data processing apparatus, create means for implementing the functions/acts specified in one or more blocks of the flowcharts and/or block diagrams. These computer-readable program instructions may also be stored in a computer-readable storage medium, and these instructions cause a computer, a programmable data processing apparatus, and/or other devices to operate in a particular manner, such that a computer-readable medium storing instructions includes an article of manufacture including instructions for implementing various aspects of the functions/acts specified in one or more blocks of the flowchart and/or block diagrams.

These computer-readable program instructions may also be loaded onto a computer, other programmable data processing apparatus, or other devices, to cause a series of operational steps to be performed on the computer, other programmable data processing apparatus, or other devices to produce a computer implemented process such that the instructions which execute on the computer, other programmable data processing apparatus, or other devices implement the functions/acts specified in one or more blocks of the flowcharts and/or block diagrams.

The flowcharts and block diagrams in the accompanying drawings illustrate the architecture, functionality, and operation of possible embodiments of systems, methods and computer program products according to various embodiments of the disclosure. In this regard, each box in a flowchart or a block diagram may represent a module, a program segment, or a part of instructions. The module, the program segment, or the part of instructions includes one or more executable instructions used for implementing specified logic functions. In some embodiments used as substitutes, functions marked in boxes may alternatively occur in a sequence different from that marked in an accompanying drawing. For example, two boxes shown in succession may actually be performed basically in parallel, and sometimes the two boxes may be performed in a reverse sequence. This is determined by a related function. Each block in the block diagram and/or the flowchart, and a combination of blocks in the block diagram and/or the flowchart may be implemented by using a dedicated hardware-based system that performs a specified function or action, or may be implemented by using a combination of dedicated hardware and computer instructions.

The embodiments of the disclosure are described above, and the foregoing descriptions are exemplary but not exhaustive and are not limited to the disclosed embodiments. Without departing from the scope and spirit of the described embodiments, many modifications and variations are apparent to a person of ordinary skill in the art. The selected terms used herein is intended to best explain the principles of the embodiments, practical applications, or technical improvements of technologies in the market, or to enable other persons of ordinary skill in the technical field to understand the embodiments disclosed herein.

## Claims

1. An automatic working system, wherein comprising:
a self-moving device, configured to automatically move and work in a working region set by a user; and
a magnetic strip, configured to generate a magnetic signal, wherein
the self-moving device comprises:
a boundary recognizing module, configured to recognize a boundary of the working region;
a magnetic induction module, configured to induce the magnetic signal; and
a control module, configured to control the self-moving device to move along the boundary according to the boundary recognized by the boundary recognizing module, and control the self-moving device to move along the magnetic strip according to the magnetic signal if the magnetic induction module induces the magnetic signal in a process of moving along the boundary.

2. The automatic working system according to claim 1, wherein the boundary of the working region is defined by a boundary line, the boundary line is configured to generate a magnetic field signal when being electrified; and the boundary recognizing module is configured to induce the magnetic field signal to recognize the boundary of the working region.

3. The automatic working system according to claim 1, wherein the automatic working system further comprises a station configured to provide maintenance for the self-moving device; and
the magnetic strip is configured to generate the magnetic signal, and the magnetic signal is configured to guide the self-moving device to the station.

4. The automatic working system according to claim 3, wherein the station is configured to charge the self-moving device;
the station is provided with a pole plate; the self-moving device is provided with a charging interface; and
the magnetic strip is configured to guide the self-moving device to the station so that the charging interface is in butt joint with the pole plate.

5. The automatic working system according to claim 1, wherein the boundary recognizing module comprises a position detection module configured to acquire a current position of the self-moving device and compare the current position with a preset map to recognize the boundary of the working region.

6. The automatic working system according to claim 1, wherein the boundary recognizing module comprises a region detection module configured to recognize the boundary of the working region based on differences between ground information of the working region and ground information of a non-working region.

7. A control method for a self-moving device, wherein comprising:
in response to a return maintenance request of the self-moving device, controlling the self-moving device to move along a boundary according to the boundary recognized by the self-moving device; and
in a process of moving along the boundary, controlling the self-moving device to move to a station along a magnetic strip in response to a magnetic signal induced by the self-moving device.

8. The method according to claim 7, wherein a step of controlling the self-moving device to move to a station along a magnetic strip comprises:
controlling the self-moving device to move to the station along the magnetic strip according to the magnetic signal; and
in response to a contact signal between a charging interface of the self-moving device and a pole plate of the station, controlling the self-moving device to stop and to be charged.

9. The method according to claim 7, wherein further comprising:
in response to a disconnecting signal between the charging interface of the self-moving device and the pole plate of the station, controlling the self-moving device to move along the magnetic strip according to the magnetic signal induced by the self-moving device; and
in a process of moving along the magnetic strip, controlling the self-moving device to move along the boundary in response to the boundary recognized by the self-moving device.

10. A self-moving device, wherein comprising:
a device body,
a boundary recognizing module, installed in the device body and configured to recognize a boundary of a working region;
a magnetic induction module, installed in the device body and configured to induce a magnetic signal, wherein the magnetic signal is generated by a magnetic strip; and
a control module, configured to control the self-moving device to move along the boundary according to the boundary recognized by the boundary recognizing module, and control the self-moving device to move along the magnetic strip according to the magnetic signal if the magnetic induction module induces the magnetic signal in a process of moving along the boundary.
